# FASCICULE DE BREVET EUROPEEN

(11) **EP 1 949 718 B1**
(45) Date de publication et mention de la délivrance du brevet: **15.04.2009**
(21) Numéro de dépôt: 06807250.3
(22) Date de dépôt: 13.10.2006
(51) Int. Cl.: H04W 64/00, G06F 17/30

(54) **PROCEDE DE CONNEXION D ' UN TERMINAL MOBILE CELLULAIRE A UN SERVICE D ' ASSISTANCE NECESSITANT UNE LOCALISATION DU TERMINAL**
VERFAHREN ZUM VERBINDEN EINES ZELLULAREN MOBILEN ENDGERÄTS MIT EINER HOTLINE, WOBEI DAS ENDGERÄT LOKALISIERT WIRD
METHOD FOR CONNECTING A CELLULAR MOBILE TERMINAL TO A HOT LINE INVOLVING LOCATING THE TERMINAL

(30) Priorité: 13.10.2005 FR 0510443
(43) Date de publication de la demande: 30.07.2008
(73) Titulaire: Bouygues Telecom, 92100 Boulogne Billancourt (FR); NTT DoCoMo, Inc., Chiyoda-ku Tokyo 100-6150 (JP)
(72) Inventeur: CHAUVIGNE, Franck, F-27120 Menilles (FR); BONNARDOT, Cécile, F-75013 Paris (FR); KERAVAL, Thibaut, F-91310 Linas (FR); ROUXEL, David, F-78000 Versailles (FR)
(74) Mandataire: Callon de Lamarck, Jean-Robert
(86) Numéro de dépôt international: PCT/EP2006/067386
(87) Numéro de publication internationale: WO 2007/042570

(56) Documents cités:
- WO-A-00/29979
- GB-A- 2 353 919
- US-A1- 2003 157 942
- US-A1- 2004 147 268

## Description

L'invention concerne le domaine de la téléphonie mobile.

Elle concerne en particulier les services d'assistance proposés aux utilisateurs de téléphones mobiles, lesquels services d'assistance nécessitent une localisation du téléphoné mobile.

Ces services d'assistance permettent par exemple à un utilisateur d'obtenir des informations (itinéraires, restaurants les plus proches, cinémas, salles de sport, etc.) concernant la zone géographique où il se trouve.

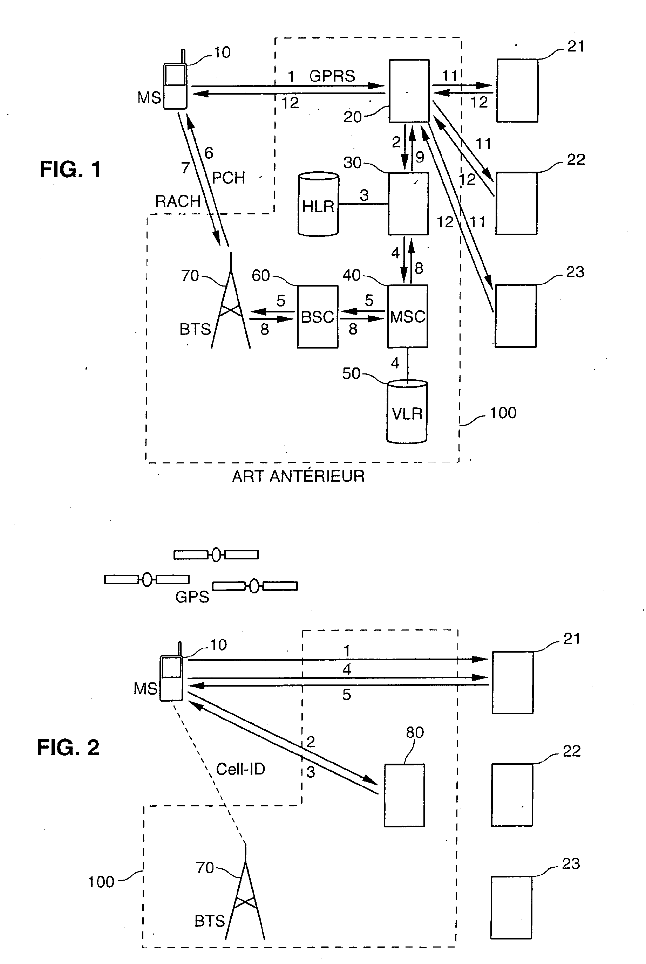

Comme illustré sur la figure 1, lorsqu'un utilisateur utilise son téléphone mobile MS 10 pour se connecter à un service d'assistance (par exemple un service i-mode^{™}) via le réseau de téléphonie mobile 100, le terminal mobile 10 transmet une requête de connexion (1) à une passerelle d'accès 20. La passerelle d'accès 20 (par exemple un serveur i-mode^{™}) déclenche alors une procédure de localisation du téléphone mobile.

A cet effet, la passerelle d'accès 20 transmet à une plateforme de localisation 30 du réseau de téléphonie mobile une requête de localisation (2) du téléphone mobile. La plateforme de localisation 30 déclenche alors un processus de localisation du téléphone mobile 10 qui est similaire au processus de recherche (paging) qui est réalisé lors de l'acheminement d'un appel vers le téléphone mobile.

La plateforme de localisation 30 interroge (3) le registre HLR (Home Location Register). Le registre HLR contient le dernier numéro du registre VLR (Visitor Location Register) auquel le téléphone mobile 10 s'est signalé.

La plateforme de localisation 30 transmet (4) au VLR l'identité IMSI (International Mobile Suscriber Identity) de l'abonné du téléphone mobile recherché.

Le centre MSC (Mobile Services Switching Center) 40 associé au VLR 50 commande, (5) une pluralité de contrôleurs BSC 60 (Base Station Controller) et de stations de base BTS (Base Transceiver Station) de la zone de localisation LA (Location Area) dans laquelle se trouve l'utilisateur pour que les stations de base BTS 70 émettent un signal de recherche (6) de l'utilisateur (signal de paging) sur un canal PCH (Paging Channel). Le signal de paging contient l'IMSI du téléphone mobile recherché.

En réponse au signal de paging (6), le téléphone mobile 10 transmet à la station de base BTS 70 la plus proche un signal (7) sur le canal logique de signalisation RACH (Random Access Channel). Le signal de réponse (7) émis par le téléphone mobile 10 contient des informations identifiant le téléphone.

La station de base BTS 70 transfère la réponse du téléphone mobile à la BSC 60 dont elle dépend et la BSC 60 transmet (8) à la plateforme de localisation 30 les références de la cellule (Cell-id) dans laquelle se trouve le téléphone mobile 10.

La plateforme de localisation 30 convertit les références de la cellule en des coordonnées de position géographique du téléphone mobile et transmet (9) les coordonnées de position géographique à la passerelle d'accès 20. Si l'utilisateur du téléphone mobile 10 accepte de communiquer sa position, la passerelle 20 transmet (11) les coordonnées géographiques au fournisseur de service 21, 22 ou 23 concerné.

Le fournisseur de service 21, 22 ou 23 peut ainsi traiter les coordonnées géographiques du téléphone mobile 10 et transmettre (12) au téléphone mobile 10 un contenu adapté en fonction de ces coordonnées.

Un inconvénient de ces services d'assistance est que l'accès à ces services est relativement long et entraîne un temps d'attente pour l'utilisateur. En particulier, la procédure de localisation par paging dure environ une quinzaine de secondes.

En outre, la procédure de localisation nécessite une série d'échanges entre le téléphone mobile et une station de base sur les canaux PCH et RACH. Par conséquent, la procédure de localisation implique une interruption des transmissions des paquets de données par le canal GPRS du terminal mobile. La navigation n'est donc pas fluide pour l'utilisateur.

US 2004/147268 A1, US 2003/157942 A1, GB-A-2 353 919 et WO 00/29979 A divulguent des procédés et des terminaux selon les préambules des revendications 1 et 11 respectivement.

Un but de l'invention est de réduire le temps nécessaire pour accéder aux services d'assistance nécessitant une localisation d'un terminal mobile.

A cet effet, l'invention propose un procédé de connexion d'un terminal mobile cellulaire à un serveur destiné à délivrer un service d'assistance nécessitant une localisation du terminal, caractérisé en ce qu'il comprend les étapes selon lesquelles :
- le terminal mobile transmet au serveur délivrant le service d'assistance, une requête de connexion au service d'assistance,
- le terminal mobile transmet également au serveur une information utile pour le serveur destiné à délivrer le service d'assistance en vue de transmettre au terminal mobile un contenu correspondant à la requête de connexion, l'information utile étant déterminée en fonction d'une information de localisation contenue dans le terminal mobile.

Le terminal mobile transmet au serveur du fournisseur de service l'information utile nécessaire pour que le serveur transmette au terminal le contenu requis, de sorte qu'il n'est pas nécessaire de mettre en oeuvre un processus de recherche du terminal mobile par le réseau de téléphonie mobile (pas de processus de paging).

Par ailleurs, l'information utile est une information qui peut être déterminée à partir d'une information de localisation disponible dans le terminal.

Le procédé de l'invention permet de réduire le temps nécessaire au terminal pour établir une connexion avec un service d'assistance.

En outre, le procédé de connexion de l'invention ne nécessite pas d'interrompre les transmissions de données via le canal données du terminal.

Dans le procédé de connexion de l'invention, la requête de connexion contient des données aptes à être identifiées par le serveur, lesdites données indiquant au serveur que les informations utiles vont être transmise au serveur par le terminal mobile.

Dans une mise en oeuvre de l'invention, le procédé de connexion, comprend les étapes selon lesquelles :
- le terminal mobile transmet à un serveur de localisation une information de localisation contenue dans le terminal mobile,
- le serveur de localisation convertit l'information de localisation en une information utile pour le serveur destiné à délivrer un service d'assistance et transmet ladite information utile au terminal mobile.

Dans un tel procédé de connexion, l'information de localisation peut être une information enregistrée dans le terminal mobile.

En particulier, l'information de localisation peut être une information identifiant une cellule d'un réseau de téléphonie mobile cellulaire dans laquelle se trouve le terminal mobile.

Dans une mise en oeuvre du procédé de connexion, le terminal mobile transmet au serveur de localisation une requête de connexion qui contient l'information utile.

Dans une mise en oeuvre du procédé de connexion, l'information utile comprend des coordonnées de position géographique du téléphone mobile.

Dans une mise en oeuvre de l'invention, le procédé de connexion, comprend les étapes selon lesquelles :
- le terminal mobile transmet au serveur destiné à délivrer le service d'assistance l'information utile,
- le serveur traite l'information utile et transmet au téléphone mobile un contenu qui dépend de l'information utile.

Dans une mise en oeuvre de l'invention, le procédé de connexion, comprend l'étape selon laquelle :
- le serveur de localisation vérifie que le service d'assistance est autorisé à recevoir le contenu qui dépend de l'information utile.

Dans une mise en oeuvre du procédé de connexion le terminal mobile transmet l'information utile via un canal données du terminal mobile.

Dans une mise en oeuvre de l'invention, le procédé de connexion, comprend une étape préalable selon laquelle le terminal mobile affiche sur un écran une fenêtre qui propose à l'utilisateur de transmettre une information de localisation du terminal mobile, l'utilisateur pouvant accepter ou refuser la proposition et dans lequel, l'étape de transmission de l'information utile n'est exécutée que si l'utilisateur accepte la proposition.

L'invention concerne également un terminal mobile selon la revendication 11.

D'autres caractéristiques et avantages ressortiront encore de la description qui suit, laquelle est purement illustrative et non limitative et doit être lue en regard des figures annexées parmi lesquelles :
- la figure 1, déjà commentée, représente de manière schématique les différentes étapes d'un procédé de connexion à un service d'assistance conforme à l'art antérieur,
- la figure 2 représente de manière schématique les différentes étapes d'un procédé de connexion à un service d'assistance conforme à un premier mode de mise en oeuvre de l'invention,
- la figure 3 représente de manière schématique une fenêtre popup qui est affichée sur un écran d'un téléphone mobile lors de l'exécution du procédé de connexion,
- la figure 4 représente de manière schématique les différentes étapes d'un procédé de connexion à un service d'assistance conforme à un deuxième mode de mise en oeuvre de l'invention.

Comme illustré sur la figure 2, selon un premier mode de mise en oeuvre du procédé de l'invention, le réseau de téléphonie mobile 100 est un réseau GSM-GPRS. Le téléphone mobile cellulaire 10 est un téléphone mobile apte à communiquer avec le réseau de téléphonie mobile 100 par l'intermédiaire d'un canal voix GSM ou d'un canal données GPRS. En particulier, le téléphone mobile 10 est apte à accéder à des services i-modes^{™}.

On suppose que l'utilisateur du téléphone mobile cellulaire 10 souhaite se connecter via le réseau de téléphonie mobile 100 à un service i-mode nécessitant une localisation du téléphone mobile 10. Par exemple, l'utilisateur sélectionne une proposition « Restaurants à proximité ».

L'utilisateur sélectionne le menu i-mode^{™} dans son téléphone mobile 10. La sélection du menu i-mode^{™} déclenche l'exécution par le navigateur du téléphone mobile 10 d'un programme API (Application Programming Interface) qui comprend les étapes suivantes.

Selon une première étape, le téléphone mobile 10 affiche sur un écran 11 une fenêtre 12 (fenêtre popup) qui propose à l'utilisateur de transmettre la position géographique du téléphone mobile à l'un des serveurs 21, 22 ou 23. Les serveurs 21, 22 et 23 sont des serveurs gérés par des fournisseurs de service.

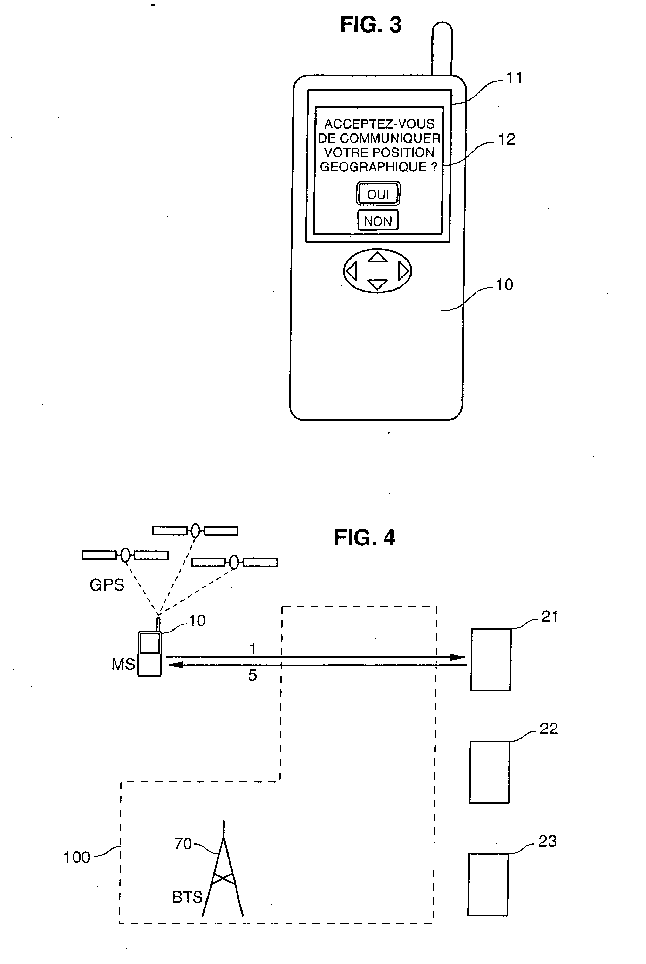

La fenêtre contient un message du type : « Acceptez-vous de communiquer votre position géographique ? ». L'utilisateur peut sélectionner l'une des réponses « OUI » ou « NON » affichées (figure 3).

Selon une deuxième étape, si l'utilisateur sélectionne la proposition « OUI », le téléphone mobile 10 transmet à l'un des serveurs 21, 22 ou 23 une requête de connexion 1.

La requête de connexion 1 est une requête de type http qui comprend l'adresse URL d'une page contenue sur l'un des serveurs 21, 22
ou 23 ainsi qu'un en-tête contenant des données aptes à être identifiées par le serveur 21. Les données indiquent au serveur 21 que la position du terminal mobile 10 va être transmise au serveur 21 par le terminal mobile 21.

Après avoir identifié ces données, le serveur 21 ne déclenche pas de processus de localisation du téléphone mobile 10.

Selon une troisième étape, le navigateur du téléphone mobile 10 détermine une information de localisation du téléphone 10. L'information de localisation est une information identifiant une cellule du réseau de téléphonie mobile cellulaire 100 dans laquelle se trouve le téléphone mobile 10 (information de Cell-id). Cette information est connue du téléphone mobile 10, elle est enregistrée dans la couche logiciel du téléphone mobile.

Selon une quatrième étape, le navigateur du téléphone mobile 10 génère une requête de localisation 2 contenant l'information de Cell-id. Le téléphone mobile 10 transmet la requête de localisation 2 à un serveur de localisation 80 du réseau 100.

Selon une cinquième étape, le serveur de localisation 80 traite la requête de localisation 2. Le serveur de localisation 80 détermine à quel serveur 21, 22 ou 23 est destiné l'information de Cell-id.

La cinquième étape est une étape de vérification des droits du fournisseur de service et de l'utilisateur.

Le serveur de localisation 80 vérifie que le fournisseur de service auquel est associé par exemple le serveur 21 est autorisé à obtenir des informations concernant la localisation du téléphone mobile 10. Le serveur de localisation 80 vérifie également que le téléphone mobile 10 est autorisé à obtenir des informations concernant sa localisation.

Selon une sixième étape, le serveur de localisation 80 convertit l'information de localisation contenue dans la requête 2 en des coordonnées de position géographique (X, Y) du téléphone mobile 10.

Selon une septième étape, le serveur de localisation 80 transmet au téléphone mobile 10 les coordonnées de position géographique (X, Y) 3.

Selon une huitième étape, le téléphone mobile 10 transmet au serveur 21 les données de position géographiques (X, Y) 4 qu'il a reçues du serveur de localisation 80.

Selon une neuvième étape, les coordonnées (X, Y) sont traitées par le serveur 21 pour transmettre au téléphone mobile 10 un contenu (itinéraires, restaurants les plus proches, cinémas, salles de sport, etc.) qui dépend de la zone géographique dans laquelle se trouve le téléphone mobile 10.

Selon une dixième étape, le serveur 21 transmet au téléphone mobile 10 le contenu correspondant 5.

Si l'utilisateur a sélectionné la réponse « NON » au cours de la première étape, alors le téléphone mobile 10 exécute directement une onzième étape selon laquelle le téléphone mobile 10 transmet à l'un des serveurs 21, 22 ou 23 une requête de connexion 1 http qui ne comprend pas d'en-tête contenant les données indiquant au serveur 21 que la position du téléphone mobile 10 va être transmise par le téléphone mobile ultérieurement.

Comme suite à cette onzième étape, le serveur 21 peut déclencher un processus de localisation du téléphone mobile 10 classique, identique aux processus de l'art antérieur (par exemple processus de paging).

Selon le procédé de connexion qui vient d'être décrit, c'est le téléphone mobile 10 lui-même qui identifie la cellule du réseau de téléphonie mobile dans laquelle il se trouve. Ce n'est donc pas le réseau qui fournit les informations utiles nécessaires à la localisation du téléphone mobile. Le procédé de localisation ne fait donc pas intervenir de plateforme de localisation.

Par ailleurs, les fournisseurs de contenu 21, 22 et 23 ne demandent pas au réseau de localiser le téléphone mobile 10.

Dans un tel procédé de connexion, on estime que les troisième, quatrième, cinquième, sixième, septième et huitième étapes durent environ 6 ou 7 secondes.

Durant ces étapes, le téléphone mobile 10 est connecté avec le serveur de localisation 80. Les échanges de données entre le téléphone mobile 10 et le serveur de localisation 80 par le canal données GPRS du téléphone mobile ne sont pas interrompus.

On notera que les l'information de localisation transmise par le téléphone mobile 10 au serveur de localisation 80 peut être converti par le serveur de localisation 80 en une information qui n'est pas nécessairement constituée des coordonnées de position géographique (X, Y) du téléphone mobile 10. Le serveur de localisation 80 peut convertir l'information de localisation en une altitude par exemple ou en tout type d'information utile pour le fournisseur de service pour transmettre un contenu approprié au téléphone mobile.

Par ailleurs, il peut également être prévu que l'utilisateur puisse configurer le téléphone mobile 10 selon deux modes de fonctionnement.

L'utilisateur peut sélectionner un premier mode de fonctionnement « avec autorisation de localisation » du téléphone mobile 10. Dans ce cas, le téléphone mobile 10 exécute toujours la première étape selon laquelle il affiche sur un écran 11 la fenêtre popup 12 qui propose à l'utilisateur de transmettre la position géographique du téléphone mobile au serveur de localisation 80. L'information de localisation n'est transmise au serveur de localisation que si l'utilisateur donne son autorisation.

Alternativement, l'utilisateur peut sélectionner un deuxième mode de fonctionnement « avec localisation systématique » du téléphone mobile 10. Dans ce cas, le téléphone mobile 10 n'exécute pas la première étape et n'affiche pas la fenêtre. L'information de localisation est transmise de manière automatique par le téléphone mobile 10 au serveur de localisation 80.

La figure 4 illustre un deuxième mode de mise en oeuvre possible du procédé de connexion.

Dans ce deuxième mode de mise en oeuvre, le téléphone mobile cellulaire 10 est muni d'un récepteur GPS (Global Positionning System) de sorte que le terminal mobile 10 est apte à déterminer les coordonnées (X, Y) de position géographique. Dans ce mode de mise en oeuvre, le téléphone mobile 10 transmet au serveur de localisation 80 une requête de connexion qui contient des informations de position comprenant les coordonnées de position géographique (X, Y) du téléphone mobile 10.

Par conséquent, le serveur de localisation 80 n'a pas à convertir les informations de position fournies par le téléphone mobile 10 puisque ces informations sont déjà sous forme de coordonnées utilisables par les serveurs 21, 22 et 23.

Selon ce deuxième mode de mise en oeuvre, la sélection du menu i-mode^{™} déclenche l'exécution par le navigateur du téléphone mobile 10 d'un programme API (Application Programming Interface) qui comprend les étapes suivantes.

Selon une première étape, le téléphone mobile 10 affiche sur un écran 11 une fenêtre 12 (fenêtre popup) qui propose à l'utilisateur de transmettre la position géographique du téléphone mobile à l'un des serveurs 21, 22 ou 23. Les serveurs 21, 22 et 23 sont des serveurs gérés par des fournisseurs de service.

La fenêtre contient un message du type : « Acceptez-vous de communiquer votre position géographique ? ». L'utilisateur peut sélectionner l'une des réponses « OUI » ou « NON » affichées (figure 3).

Selon une deuxième étape, si l'utilisateur sélectionne la proposition « OUI », le téléphone mobile 10 détermine des coordonnées de position géographique (X, Y) du téléphone mobile 10. Cette détermination est possible lorsque le téléphone mobile 10 est muni de moyens de positionnement tels qu'un récepteur GPS par exemple.

Selon une troisième étape, le téléphone mobile 10 transmet à l'un des serveurs 21, 22 ou 23 une requête de connexion 1.

La requête de connexion 1 est une requête de type http qui comprend l'adresse URL d'une page contenue sur l'un des serveurs 21, 22
ou 23 ainsi que des données identifiant la position géographique (X, Y) du téléphone mobile 10.

Après avoir identifié ces données, le serveur 21 ne déclenche pas de processus de localisation du téléphone mobile 10.

Selon une quatrième étape, les coordonnées de position géographiques (X, Y) sont traitées par le serveur 21 pour transmettre au téléphone mobile 10 un contenu (itinéraires, restaurants les plus proches, cinémas, salles de sport, etc.) qui dépend de la zone géographique dans laquelle se trouve le téléphone mobile 10.

Selon une cinquième étape, le serveur 21 transmet au téléphone mobile 10 le contenu correspondant 5.

Si l'utilisateur a sélectionné la réponse « NON » au cours de la première étape, alors le téléphone mobile 10 exécute une sixième étape selon laquelle le téléphone mobile 10 transmet à l'un des serveurs 21, 22 ou 23 une requête de connexion 1 http qui ne comprend pas la position géographique (X, Y) du téléphone mobile 10.

Comme suite à cette sixième étape, le serveur 21 peut déclencher un processus de localisation du téléphone mobile 10 classique, identique aux processus de l'art antérieur (par exemple processus de paging).

Par ailleurs, il peut être prévu que l'utilisateur puisse configurer le téléphone mobile 10 selon deux modes de fonctionnement.

L'utilisateur peut sélectionner un premier mode de fonctionnement « avec autorisation de localisation » du téléphone mobile 10. Dans ce cas, le téléphone mobile 10 exécute toujours la première étape selon laquelle il affiche sur un écran 11 la fenêtre popup 12 qui propose à l'utilisateur de transmettre la position géographique du téléphone mobile au fournisseur de contenu. L'information de localisation n'est transmise au fournisseur de contenu que si l'utilisateur donne son autorisation.

Alternativement, l'utilisateur peut sélectionner un deuxième mode de fonctionnement « avec localisation systématique » du téléphone mobile 10. Dans ce cas, le téléphone mobile 10 n'exécute pas la première étape et n'affiche pas la fenêtre popup. L'information de localisation est transmise de manière automatique au fournisseur de contenu 21, 22 ou 23.

On notera qu'il peut être prévu que le téléphone mobile 10 dispose de plusieurs sources de positionnement, tels que par exemple l'une des sources suivante : Cell-id, GPS, A-GPS, Cell-id + NMR, Cell-id + TA, Cell-id + TA + NMR. Dans ce cas, le navigateur du téléphone mobile peut être programmé pour sélectionner le moyen de positionnement le plus approprié (le plus précis ou le plus rapide). Dans ce cas, le téléphone mobile 10 transmet au serveur de localisation 80 des informations identifiant la source de positionnement sélectionnée et l'information de localisation associée. Par ailleurs, le serveur de localisation 80 comprend des moyens pour identifier à partir de ces informations la source de positionnement et pour en déduire les coordonnées géographiques du téléphone mobile.

Dans tous les cas, l'information d'identification de cellule Cell-id sera disponible dans le téléphone mobile et pourra être utilisée comme information de localisation.

## Revendications

1. Procédé de connexion d'un terminal mobile cellulaire (10) à un serveur (21, 22, 23) destiné à délivrer un service d'assistance nécessitant une localisation du terminal (10), comprenant les étapes selon lesquelles :
- le terminal mobile (10) transmet au serveur (21, 22, 23) délivrant le service d'assistance, une requête de connexion (1) au service d'assistance,
- le terminal mobile (10) transmet également au serveur (21) une information utile (4) pour le serveur (21, 22, 23) destiné à délivrer le service d'assistance en vue de transmettre au terminal mobile (10) un contenu correspondant à la requête de connexion, l'information utile (4) étant déterminée en fonction d'une information de localisation contenue dans le terminal mobile (10)
**caractérisé en ce que** la requête de connexion (1) contient des données aptes à être identifiées par le serveur (21, 22, 23), lesdites données indiquant au serveur (21, 22, 23) que les informations utiles vont être transmises au serveur (21, 22, 23) par le terminal mobile (10).

2. Procédé selon l'une des revendications qui précèdent, comprenant les étapes selon lesquelles :
- le terminal mobile (10) transmet à un serveur de localisation (80) une information de localisation (2) contenue dans le terminal mobile,
- le serveur de localisation (80) convertit l'information de localisation (2) en une information (3) utile pour le serveur destiné à délivrer un service d'assistance (21, 22, 23) et transmet ladite information (3) utile au terminal mobile (10).

3. Procédé selon la revendication 2, dans lequel l'information de localisation (2) est une information enregistrée dans le terminal mobile (10).

4. Procédé selon la revendication 3, dans lequel l'information de localisation est une information identifiant une cellule d'un réseau de téléphonie mobile cellulaire (100) dans laquelle se trouve le terminal mobile (10).

5. Procédé selon la revendication 1, dans lequel le terminal mobile (10) transmet à un serveur de localisation (80) une requête de connexion qui contient l'information utile.

6. Procédé selon l'une des revendications qui précèdent, dans lequel l'information utile (3) comprend des coordonnées de position géographique du téléphone mobile (10).

7. Procédé selon l'une des revendications qui précèdent, comprenant les étapes selon lesquelles :
- le terminal mobile (10) transmet au serveur destiné à délivrer le service d'assistance (21, 22, 23) l'information utile (4),
- le serveur (21) traite l'information utile (4) et transmet au téléphone mobile (10) un contenu (5) qui dépend de l'information utile (4).

8. Procédé selon la revendication 7, comprenant une étape selon laquelle :
- le serveur de localisation (80) vérifie que le service d'assistance (21, 22, 23) est autorisé à recevoir le contenu (5) qui dépend de l'information utile (4).

9. Procédé selon l'une des revendications qui précèdent, dans lequel le terminal mobile (10) transmet l'information utile (4) via un canal données du terminal mobile (10).

10. Procédé selon l'une des revendications qui précèdent, comprenant une étape préalable selon laquelle le terminal mobile (10) affiche sur un écran (11) une fenêtre (12) qui propose à l'utilisateur de transmettre une information de localisation du terminal mobile (10), l'utilisateur pouvant accepter ou refuser la proposition et dans lequel, l'étape de transmission de l'information utile (4) n'est exécutée que si l'utilisateur accepte la proposition.

11. Terminal mobile cellulaire (10) apte à être connecté à un serveur délivrant un service d'assistance (21, 22, 23) nécessitant une localisation du terminal, le terminal (10) comprenant des moyens de traitement programmés pour exécuter les étapes selon lesquelles le terminal mobile (10) transmet à un serveur délivrant le service d'assistance (21, 22, 23) une requête de connexion (1) au service d'assistance, et le terminal mobile (10) transmet également au serveur (21, 22, 23) une information utile (4) pour le serveur de service (21) en vue de transmettre au terminal mobile (10) un contenu correspondant à la requête de connexion (1), l'information utile (4) étant déterminée en fonction d'une information de localisation contenue dans le terminal mobile (10), **caractérisé en ce que** les moyens de traitement sont programmés pour que le terminal transmette au serveur une requête contenant des données aptes à être identifiées par le serveur (21, 22, 23), lesdites données indiquant au serveur (21,22, 23) que les information utiles vont être transmises au serveur par le terminal mobile.

## Claims

1. A connection method of a cellular mobile terminal (10) to a server (21, 22, 23) that is intended to deliver an assistance service which necessitates location of the terminal (10), including steps in which:
- the mobile terminal (10) transmits, to the server (21, 22, 23) delivering the assistance service, a request for connection (1) to the assistance service,
- the mobile terminal also transmits, to the server (21), useful information (4) for the server (21, 22, 23) that is intended to deliver the assistance service with a view to transmitting, to the mobile terminal (10), content corresponding to the connection request, with the useful information (4) being determined as a function of location information contained in the mobile terminal (10), **characterised in that** the connection request (1) contains data that is adapted to be identified by the server (21, 22, 23), the said data indicating to the server (21, 22, 23) that the useful information will be transmitted to the server (21, 22, 23) by the mobile terminal.

2. The method according to any of the preceding claims, including steps in which:
- the mobile terminal (10) transmits, to a location server (80), location information (2) contained in the mobile terminal,
- the location server (80) converts the location information (2) into useful information (3) for the server that is intended to deliver an assistance service (21, 22, 23), and transmits the said useful information (3) to the mobile terminal (10).

3. The method according to claim 2, wherein the location information (2) is information recorded in the mobile terminal (10).

4. The method according to claim 3, wherein the location information is information that identifies a cell of a cellular mobile telephony network (100) in which the mobile terminal is located (10).

5. The method according to claim 1, wherein the mobile terminal (10) transmits, to a location server (80), a connection request that contains the useful information.

6. The method according to any of the preceding claims, wherein the useful information (3) includes geographical position coordinates of the mobile phone (10).

7. The method according to any of the preceding claims, including steps in which:
- the mobile terminal (10) transmits the useful information (4) to the server that is intended to deliver the assistance service (21, 22, 23),
- the server (21) processes the useful information (4), and transmits content (5) that is dependent upon the useful information (4) to the mobile phone (10).

8. The method according to claim 7, including a step in which:
- the location server (80) verifies that the assistance service (21, 22, 23) is authorised to receive the content (5) that is dependent upon the useful information (4).

9. The method according to any of the preceding claims, wherein the mobile terminal (10) transmits the useful information (4) via a data channel of the mobile terminal (10).

10. The method according to any of the preceding claims, including a preliminary step in which the mobile terminal (10) displays, on a screen (11), a window (12) that proposes to the user, the transmission of location information of the mobile terminal (10), the user being able to accept or refuse the proposal, and wherein the step for transmission of the useful information (4) is executed only if the user accepts the proposal.

11. A cellular mobile terminal (10) adapted to be connected to a server delivering an assistance service (21, 22, 23) that necessitates location of the terminal, the terminal (10) including processing means that are programmed to execute the steps, in which the mobile terminal (10) transmits, to a server delivering the assistance service (21, 22, 23), a request (1) for connection to the assistance service, and the mobile terminal (10) also transmits, to the server (21, 22, 23), useful information (4) for the service server (21), with a view to transmitting to the mobile terminal (10) content corresponding to the connection request (1), with the useful information (4) being determined as a function of location information contained in the mobile terminal (10), **characterised in that** the processing means are programmed so that the terminal transmits to the server a request containing data adapted to be identified by the server (21, 22, 23), the said data indicating to the server (21, 22, 23) that the useful information will be transmitted to the server by the mobile terminal.

## Patentansprüche

1. Verfahren zum Verbinden eines zellularen mobilen Endgeräts (10) mit einem Server (21, 22, 23), der dazu bestimmt ist, eine Hotline bereitzustellen, für die die Lokalisierung des Endgeräts (10) notwendig ist, die Schritte umfassend, denen zufolge:
- das mobile Endgerät (10) dem Server (21, 22, 23), der die Hotline bereitstellt, eine Verbindungsanfrage (1) an die Hotline übermittelt,
- das mobile Endgerät (10) dem Server (21) ebenfalls eine für den Server (21, 22, 23), der zur Bereitstellung der Hotline bestimmt ist, zweckdienliche Information (4) übermittelt, um dem mobilen Endgerät (10) einen Inhalt zu übermitteln, welcher der Verbindungsanfrage entspricht, wobei die zweckdienliche Information (4) von einer Lokalisierungsinformation abhängt, die in dem mobilen Endgerät (10) enthalten ist,
**dadurch gekennzeichnet, dass** die Verbindungsanfrage (1) Daten enthält, die vom Server (21, 22, 23) identifizierbar sind, wobei die Daten dem Server (21, 22, 23) anzeigen, dass die zweckdienlichen Informationen dem Server (21, 22, 23) vom mobilen Endgerät (10) übermittelt werden.

2. Verfahren nach einem der vorangehenden Ansprüche, die Schritte umfassend, denen zufolge:
- das mobile Endgerät (10) einem Lokalisierungsserver (80) eine Lokalisierungsinformation (2) übermittelt, die in dem mobilen Endgerät enthalten ist,
- der Lokalisierungsserver (80) die Lokalisierungsinformation (2) in eine Information (3) umwandelt, die dem Server zweckdienlich ist, welcher dazu bestimmt ist, eine Hotline (21, 22, 23) bereitzustellen, und die zweckdienliche Information (3) an das mobile Endgerät (10) übermittelt.

3. Verfahren nach Anspruch 2, wobei die Lokalisierungsinformation (2) eine in dem mobilen Endgerät (10) gespeicherte Information ist.

4. Verfahren nach Anspruch 3, wobei die Lokalisierungsinformation eine Information ist, die eine Zelle eines Netzes der zellularen mobilen Telefonie (100) identifiziert, in der sich das mobile Endgerät (10) befindet.

5. Verfahren nach Anspruch 1, wobei das mobile Endgerät (10) einem Lokalisierungsserver (80) eine Verbindungsanfrage übermittelt, welche die zweckdienliche Information enthält.

6. Verfahren nach einem der vorhergehenden Ansprüche, wobei die zweckdienliche Information (3) Koordinaten der geografischen Position des Mobiltelefons (10) umfasst.

7. Verfahren nach einem der vorhergehenden Ansprüche, die Schritte umfassend, denen zufolge:
- das mobile Endgerät (10) dem Server, der zur Bereitstellung der Hotline (21, 22, 23) bestimmt ist, die zweckdienliche Information (4) übermittelt,
- der Server (21) die zweckdienliche Information (4) verarbeitet und dem Mobiltelefon (10) einen Inhalt (5) übermittelt, der von der zweckdienlichen Information (4) abhängt.

8. Verfahren nach Anspruch 7, einen Schritt umfassend, dem zufolge:
- der Lokalisierungsserver (80) überprüft, ob die Hotline (21, 22, 23) berechtigt ist, den Inhalt (5) zu empfangen, der von der zweckdienlichen Information (4) abhängt.

9. Verfahren nach einem der vorhergehenden Ansprüche, wobei das mobile Endgerät (10) die zweckdienliche Information (4) über einen Datenkanal des mobilen Endgeräts (10) übermittelt.

10. Verfahren nach einem der vorhergehenden Ansprüche, einen vorangehenden Schritt umfassend, dem zufolge das mobile Endgerät (10) auf einem Bildschirm (11) ein Fenster (12) anzeigt, das dem Benutzer vorschlägt, eine Lokalisierungsinformation des mobilen Endgeräts (10) zu übermitteln, wobei der Benutzer den Vorschlag akzeptieren oder ablehnen kann, und wobei der Schritt der Übermittlung der zweckdienlichen Information (4) nur dann ausgeführt wird, wenn der Benutzer den Vorschlag akzeptiert.

11. Zellulares mobiles Endgerät (10), das imstande ist, mit einem Server verbunden zu werden, der eine Hotline (21, 22, 23) bereitstellt, welche eine Lokalisierung des Endgeräts benötigt, wobei das Endgerät (10) Mittel zur programmierten Verarbeitung umfasst, um die Schritte durchzuführen, denen zufolge das mobile Endgerät (10) einem Server, der die Hotline (21, 22, 23) bereitstellt, eine Verbindungsanfrage (1) an die Hotline übermittelt, und das mobile Endgerät (10) dem Server (21, 22, 23) ebenfalls eine für den Serviceserver (21) zweckdienliche Information (4) übermittelt, um dem mobilen Endgerät (10) einen Inhalt zu übermitteln, der der Verbindungsanfrage (1) entspricht, wobei die zweckdienliche Information (4) von einer in dem mobilen Endgerät (10) enthaltenen Lokalisierungsinformation abhängt, **dadurch gekennzeichnet, dass** die Verarbeitungsmittel programmiert sind, damit das Endgerät dem Server eine Anfrage übermittelt, die Daten enthält, welche vom Server (21, 22, 23) identifizierbar sind, wobei die Daten dem Server (21, 22, 23) angeben, dass die zweckdienlichen Informationen dem Server vom mobilen Endgerät übermittelt werden.
